# EUROPÄISCHE PATENTSCHRIFT

(11) **EP 0 445 101 B1**
(45) Veröffentlichungstag und Bekanntmachung des Hinweises auf die Patenterteilung: **04.01.1995**
(21) Anmeldenummer: 91890007.7
(22) Anmeldetag: 16.01.1991
(51) Int. Cl.: G05D 7/06, B05C 11/10, B05B 9/047

(54) **Versiegelungsverfahren für Isolierglas**
Method for the sealing of insulating glazing assemblies
Procédé d'étanchement de vitrages d'isolation

(30) Priorität: 28.02.1990 AT 474/90
(43) Veröffentlichungstag der Anmeldung: 04.09.1991
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 312 440
- EP-A- 0 337 978
- DE-A- 1 577 640
- FR-A- 2 560 813
- FR-A- 2 597 025
- FR-A- 2 599 803
- GB-A- 2 016 960
- GB-A- 2 192 567
- US-A- 4 858 172

## Beschreibung

Die Erfindung betrifft ein Verfahren zum Füllen der Randfuge von Isolierglasscheiben mit Füllmasse, wobei die Füllmasse von einem Förderzylinder zu wenigstens einer Fülldüse gefördert wird, die durch Bewegen der Fülldüse und/oder der Isolierglasscheibe entlang der Randfuge bewegt wird, wobei der Förderzylinder für die Füllmasse von einem Hydraulikmedium angetrieben wird.

Derartige Verfahren sind in den verschiedensten Ausführungen bekannt, in welchem Zusammenhang auf die EP-A-337 978, die FR-A-25 60 813, die EP-A-252 066, die GB-A-20 16 960 und die DE-AS 28 46 785 verwiesen werden kann. Insbesondere in der EP-A-337 978 ist das Problem der Regelung der in der Zeiteinheit aus der wenigstens einen Fülldüse austretenden Füllmasse angesprochen, wobei dort vorgeschlagen wird, die Geschwindigkeit, mit der die Fülldüse entlang dem Rand der Isolierglasscheibe bewegt wird, an die jeweilige Auspreßrate an Füllmasse angepaßt festzulegen. Im einzelnen wird vorgeschlagen, bei einer Erhöhung der Auspreßrate die Geschwindigkeit, mit der sich die Fülldüse entlang der Randfuge bewegt, zu vergrößern, und umgekehrt. Die EP-A-337 978 erwähnt auch den Vorschlag, die Versiegelungsmasse mit Hilfe einer Zahnradpumpe zur Fülldüse zu fördern.

Andere Verfahren arbeiten mit Regelventilen (Proportionalventilen), die aber nicht in der Lage sind, die raschen Änderungen der Förderrate an Füllmasse (beispielsweise Änderung von 0,04 l/min innerhalb eines Zeitraumes von einer Zehntelsekunde auf beispielsweise 1 l/min) genau und in der benötigten Schnelligkeit auszuführen. Ein weiteres Problem bei den bekannten Verfahren ist es, daß der nötige Auspreßdruck der in der Größenordnung von 300 bar liegt, bei geringen Förderleistungen nicht eingehalten werden kann.

In der FR-A-2 597 025 wird eine Vorrichtung zum Auftragen eines Stranges aus Kleber oder Versiegelungsmaterial auf ein Werkstück beschrieben. Die aus der FR-A-2 597 025 bekannte Vorrichtung besitzt eine Kolbenpumpe, deren Kammer mit einer Zuführleitung und mit einer Düse verbunden ist. Der Kolben der Kolbenpumpe wird über einen Spindelantrieb von einem Motor angetrieben. Am Zylinder der Kolbenpumpe ist im Bereich von deren Kammer ein Drucksensor vorgesehen. Um die durch die Düse ausgespritzte Menge an pastöser Masse zu regeln wird bei der FR-A-2 597 025 die Drehzahl des Motors über eine Steuerung auf den gewünschten Wert eingestellt.

Der Erfindung liegt die Aufgabe zugrunde, ein Verfahren der eingangs genannten Gattung anzugeben, mit dem die je Zeiteinheit aus der Fülldüse ausgepreßte Menge an Füllmasse genau und rasch auf den gewünschten Wert eingestellt werden kann und mit dem allenfalls notwendige Änderungen der Förderrate ebenso genau und rasch durchgeführt werden können.

Erfindungsgemäß wird dies bei einem Verfahren der eingangs genannten Gattung durch die Merkmale des Patentanspruches erreicht.

Weitere Einzelheiten und Merkmale der Erfindung ergeben sich aus der nachstehenden Beschreibung, in der auf die angeschlossene schematische Zeichnung Bezug genommen wird.

Zum Füllen der Randfuge 2 einer Isolierglasscheibe 1 mit Füllmasse ist eine Fülldüse 3 (Versiegelungsdüse) vorgesehen, die durch Bewegen der Isolierglasscheibe 1 und/ oder der Fülldüse 3 entlang der Randfuge 2 bewegt wird und dabei Füllmasse in die Randfuge 2 einbringt.

Der Fülldüse 3 wird die Füllmasse durch einen Förderzylinder 4 über eine wenigstens teilweise flexibel ausgebildete Leitung 5 zugeführt. Die im Raum 6 des Förderzylinders 4 enthaltene Füllmasse wird über einen Kolben 8 mit Druck (Größenordnung 300 bar) beaufschlagt. Hiezu ist an den Raum 7 des Förderzylinders 4 eine Leitung 9 für ein Hydraulikmedium angeschlossen, das von einer Kolbenpumpe 10 (Hubkolben pumpe) mit dem jeweils erforderlichen Druck gefördert bzw. mit dem entsprechenden Druck beaufschlagt wird.

Die Kolbenpumpe 10 wird von einem insbesondere elektrischen Regelmotor 11 angetrieben. Zur Regelung der Drehzahl des Motors 11 ist eine elektronische Steuerung 12 vorgesehen, mit der die Drehzahl des Antriebsmotors 11 geregelt werden kann.

Das erfindungsgemäße Verfahren kann in gleicher Weise für das Füllen der Randfuge von Isolierglasscheiben mit Füllmasse ausgeführt werden, bei der mehr als eine Fülldüse verwendet wird. Sinngemäß kann das Füllverfahren auch mit Zwei- oder Mehrfachfülldüsen (für die Füllung von Dreischeiben- und Mehrscheiben-Isolierglas) verwendet werden.

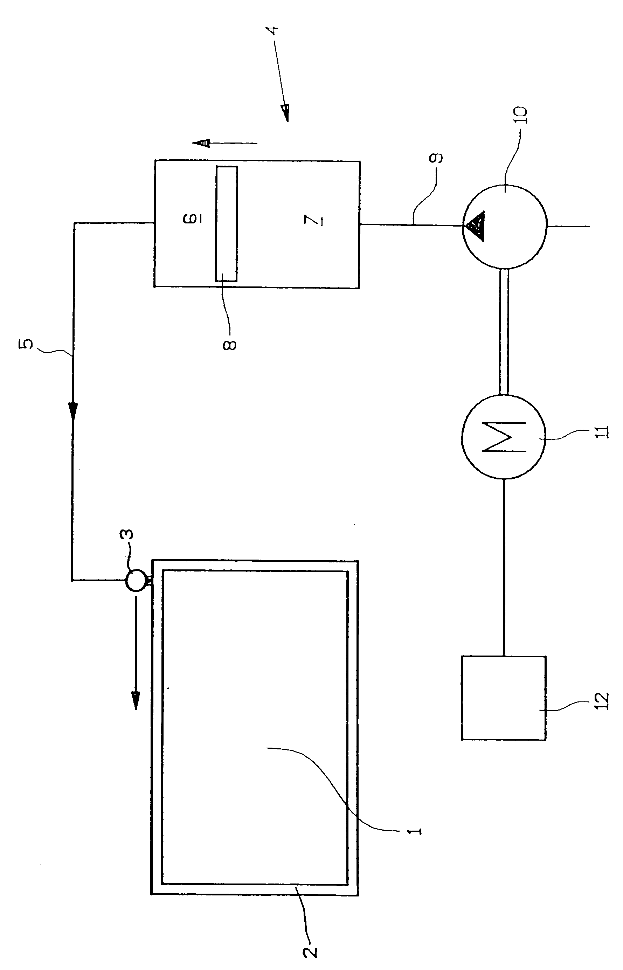

## Patentansprüche

1. Verfahren zum Füllen der Randfuge (2) von Isolierglasscheiben (1) mit Füllmasse, wobei die Füllmasse von einem Förderzylinder (4) zu wenigstens einer Fülldüse (3) gefördert wird, die durch Bewegen der Fülldüse und/oder der Isolierglasscheibe entlang der Randfuge bewegt wird, wobei der Förderzylinder für die Füllmasse von einem Hydraulikmedium angetrieben wird, dadurch gekennzeichnet, daß man das den Kolben (8) des Förderzylinders (4) antreibende Hydraulikmedium mit Hilfe einer Kolbenpumpe (10) unter Druck setzt, wobei die Kolbenpumpe (10) über eine Leitung (9) mit dem Förderzylinder (4) verbunden ist, daß man die Kolbenpumpe mittels eines elektrischen Regelmotors (11) antreibt, daß man die aus der Fülldüse (3) in der Zeiteinheit austretende Menge an Füllmasse durch Ändern der Drehzahl des elektrischen Regelmotors (11) regelt und daß man die Drehzahl des die als Hubkolbenpumpe ausgebildete Kolbenpumpe (10) antreibenden elektrischen Regelmotors (11) elektronisch regelt.

## Claims

1. Method for filling the edge joint (2) of panes (1) of insulating glass with filler, wherein the filler is transported by a transport cylinder (4) to at least one filler nozzle (3), which is moved along the edge joint by movement of the filler nozzle and/or the pane of insulating glass, wherein the transport cylinder for the filler is driven by hydraulic medium, characterised in that the hydraulic medium driving the piston (8) of the transport cylinder (4) is placed under pressure by means of a piston pump (10), said piston pump (10) being connected to the transport cylinder (4) via a pipe (9); that the piston pump is driven by means of an electric variable speed motor (11); that the quantity of filler discharged from the filler nozzle (3) per unit time is controlled by changing the speed of the electric variable speed motor; and that the speed of the electric variable speed motor (11) driving the piston pump (10) constructed as a reciprocating pump is controlled electronically.

## Revendications

1. Procédé pour le remplissage de l'interstice marginal (2) de vitrages isolants (1) à l'aide de masse de remplissage, la masse de remplissage étant refoulée par un cylindre de refoulement (4) vers au moins une buse de remplissage (3) qui, par déplacement de la buse de remplissage et/ou du vitrage isolant, est déplacée le long de l'interstice marginal, le cylindre de refoulement pour la masse de remplissage étant entraîné par un fluide hydraulique, caractérisé par le fait qu'on met sous pression le fluide hydraulique agissant sur le piston (8) du cylindre de refoulement (4) à l'aide d'une pompe a piston (10) reliée par une conduite (9) au cylindre de refoulement (4), qu'on entraîne la pompe à piston au moyen d'un moteur électrique (11) à vitesse variable, qu'on règle la quantité de masse de remplissage sortant de la buse de remplissage (3) par unité de temps par variation de la vitesse de rotation du moteur de régulation électrique et qu'on régule électroniquement la vitesse de rotation du moteur électrique (11) entraînant la pompe à piston (10) réalisée sous forme de pompe à piston alternatif.
